# EUROPEAN PATENT APPLICATION

(11) **EP 0 631 242 A2**
(43) Date of publication of application: **28.12.1994**
(21) Application number: 94109851.9
(22) Date of filing: 24.06.1994
(51) Int. Cl.: G06F 15/20

(54) **Text processing device with decorative character shading function**

(30) Priority: 24.06.1993 JP 180761/93
(71) Applicant: BROTHER KOGYO KABUSHIKI KAISHA, Nagoya-shi, Aichi-ken 467 (JP)
(72) Inventor: Hirono, Kazuhisa, c/o Brother Kogyo K. K., Nagoya-shi, Aichi-ken (JP)
(74) Representative: Prüfer, Lutz H., Dipl.-Phys.

(57) **Abstract**

To provide a tape print device capable of printing inputted character strings in attractive shaded characters wherein the side and direction of shading can be freely modified. When a shading added pattern number is set at 3, and when whitened-out shaded character is set, then the shading direction is left, up, right, and down and the shading dot number is 5. Therefore, an inputted character string ABCD is printed on the print tape 5 with 5 dots worth of shading added to the left side of the letter "A," with 5 dots worth of shading added to the upper side of the letter "B," with 5 dots worth of shading added to the right side of the letter "C," and with 5 dots worth of shading added to the lower side of the letter "D."

## Description

The present invention relates to a text processing device, and more particularly, to a text processing device wherein when inputted characters or symbols are printed with shading, a shading direction and a shading size of the character or the symbol can freely be set or set using a shade addition pattern.

A text processing device such as a word processor basically includes a display for displaying several rows of text data, a keyboard, and a printing mechanism having, for example, a dot print head. The text processing device is capable of printing text data for inputted text or symbols at a designated character size, character pitch and line spacing on a paint sheet with a desired font such as gothic. The text processing device is also capable of printing shaded characters or whitened-out characters using a character enhancement feature.

The term "shading" as used herein is intended to mean marking made within outlines to suggest three-dimensionality or shadow in characters or symbols. The term "whitened-out" means non-relief type.

In the lane enhancement feature for making the shaded characters, the shading direction is a predetermined right-downward and the size of the shade is determined to have a predetermined number of dots.

Applicant proposed, as disclosed in Japanese Utility Model Laid-Open Publication No. HEI-1-85050, a tape printer with a text processing function. The tape printer can print inputted text data on an elongated web-like medium or a tape (for example, with widths of 10 or 24 mm) as a print medium at designated character sizes, character pitches using a desired font such as gothic. Various features or functions are added to this tape printer, including a function for printing shaded characters or whitened-out characters.

In the shaded character printing feature added to the tape printer, the shading direction and the shading size of the shaded character to be produced are fixed in advance.

To add shading to inputted characters or symbols with such a tape printer, a user may want to select the shading direction from, for example, up, right and right-upward and also to change the shading size to produce unique shaded characters. However, due to limitations in the shaded character printing feature, the conventional text processing device is incapable of producing ouch unique shaded characters.

Accordingly, it is an object of the present invention to provide a text processing device capable of producing decorative shaded characters while freely setting the shading direction and the shading size.

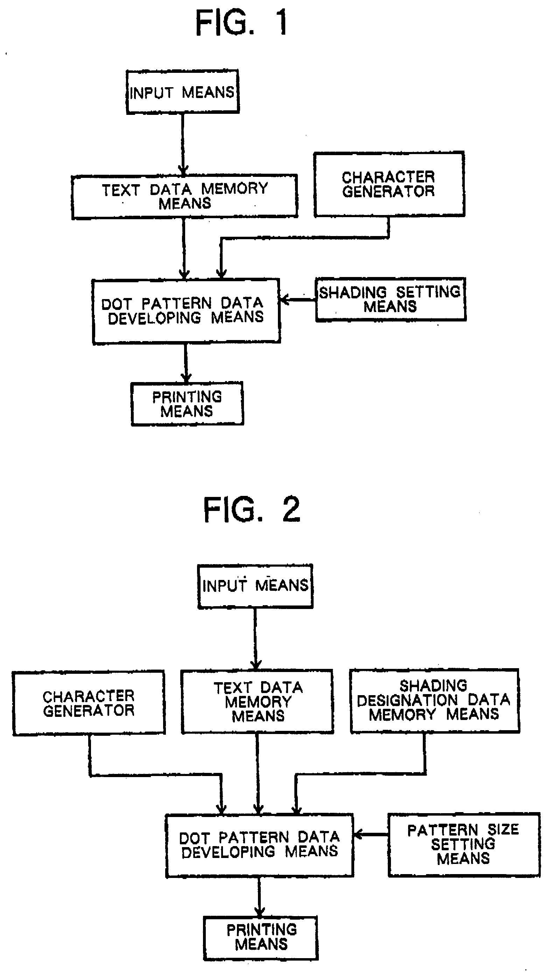

In one aspect of the present invention, there is provided, as shown in Fig. 1 in block form, a text processing device which includes input means for inputting commands and text data composed of at least one of symbols and characters; text data memory means for storing the text data inputted by said input means; a character generator storing data regarding dot patterns of symbols and characters for a selected font, printing means for printing the symbols and characters; shading setting means for setting a direction at which shading is added to selected ones of the symbols and characters contained in the text data, information regarding shading direction being outputted from said shading setting means; and dot pattern data developing means for producing dot pattern data for the selected ones of the symbols and characters to which shading is added based on the data stored in said character generator and based further on the information outputted from said shading setting means, dot pattern data for the selected ones of the symbols and characters being output from said dot pattern data developing means to said printing means.

In a text processing device thus constructed, the direction at which shading is added when printing selected characters is set in the shading setting means. The dot pattern data developing means produces dot pattern data for the characters to be printed as shaded characters based on the data from the character generator and data set in the shading setting means and outputs the resultant dot pattern data to the printing means. As a result, the printing means receives the dot pattern data from the dot pattern data developing means and prints the characters with shading attached in the set direction.

In this way, the direction at which shading is attached to a character or symbol can be set. Because dot pattern data is produced and printed for characters and symbols with shading attached thereto in the set direction, decorative shaded characters can be printed with the shading direction freely modified.

According to another aspect of the invention, there is provided, as shown in Fig. 2 in block, a text processing device comprising input means for inputting a character string composed of at least one of symbols and characters; text data memory means for storing the character string inputted by said input means; a character generator storing data regarding dot patterns of symbols and characters for a selected font; printing means for printing the symbols and characters; shading designation data memory means for storing a plurality of shading added patterns, each of the plurality of shading added patterns having shading designation data designating shading of each character and symbol making up of the character string; pattern setting means for setting one of the plurality of shading added patterns in regards to the character string stored in said text data memory means; dot pattern data developing means for producing dot pattern data for the symbols and the characters making up of the character string based on the character string stored in said text data memory, the data stored in said character generator, and the shading designation data corresponding to the shading added pattern set by said pattern setting means, dot pattern data produced by said dot pattern data developing means being output to said printing means.

In the text processing device constructed above, a plurality of shading designation data for designating the shading of each character and symbol in the character string is preset. When one shading added pattern is selected for the character string stored in the text data by way of the pattern setting means, the dot pattern data developing means produces dot pattern data for output to the print means based on the character string data in the text data, the data from the character generator, and the shading designation data corresponding to the selected shading added pattern set by the pattern setting means. As a result, the printing means receives dot pattern data from the dot pattern data developing means and prints shaded characters in accordance with the shading added patters set for the characters, symbols.

In this way, a plurality of shading designation data for designating the shading of each character, symbol, and the like is preset for each shading added pattern for a plurality of character strings. Therefore, all that needs to be done is inputting of text data setting of the shading added pattern. Each text data character string is developed into dot pattern data for the set shading added pattern and the dot pattern data is printed. Therefore, each character string can be simply and attractively printed with shading added to the characters depending on how the shading setting data is set.

The particular features and advantages of the invention as well as other objects will become apparent from the following description taken in connection with the accompanying drawings, in which:
Fig. 1 is a functional block diagram showing structure of claim 1;
Fig. 2 is a functional block diagram showing structure of claim 3;
Fig. 3 is a planer view of a tape print device;
Fig. 4 is a block diagram of a control system for the tape print device;
Fig. 5 is a table showing setting content of a shade designation table;
Fig. 6 is a table showing shading direction indicated by a shading direction counter;
Fig. 7 is a diagram showing data stored in a shading information memory;
Fig. 8 is a schematic flow chart of a routine of the tape print control;
Fig. 9 is a schematic flow chart showing a routine for a character mode setting process control;
Fig. 10 is a schematic flow chart showing a routine for a setting mode change process control;
Fig. 11 is a schematic flow chart showing a routine for a character mode change/selection process control;
Fig. 12 is a schematic flow chart showing a routine for a category selection process control;
Fig. 13 is a schematic flow chart showing a routine for a print process control;
Fig. 14 is a schematic flow chart showing a routine for a shaded character production process control;
Fig. 15 is a schematic flow chart showing a routine for an u shading production process control;
Fig. 16 is a schematic flow chart showing a routine for a right shading production process control;
Fig. 17 is a schematic flow chart showing a routine for a down shading production process control;
Fig. 18 is a schematic flow chart showing a routine for a left shading production process control;
Fig. 19 is a diagram of a printed character string of the character string ABCD with shading added to the left side of characters;
Fig. 20 is a diagram of a printed character string of the character string ABCD with shading added to the right side of characters; and
Fig. 21 is a diagram of a printed character string of the character string ABCD with shading added to the characters according to a shading added pattern. [0013]
A preferred embodiment of the present invention will now be described while referring to the accompanying drawings.

The preferred embodiment is directed to a Japanese language tape printer capable of printing a variety of characters such as Chinese characters (*kanji*), Japanese syllabary (*hiragana* or *katakana*), alphabetic characters, and symbols on a print tape.

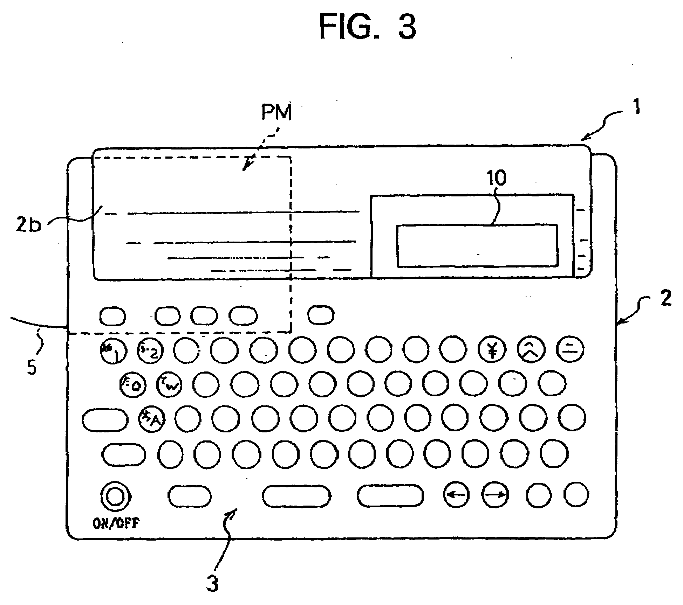

As shown in Fig. 3, a keyboard 3 is positioned to the front portion of the frame 2 of the tape printer 1. A print mechanism PM is positioned to the center of the frame behind the keyboard 3. A liquid crystal display 10 capable of displaying the equivalent of six characters and/or symbols at once is provided to the curved frame portion 2b above the rear side of the keyboard 3.

The keyboard 3 is provided with a plurality of character keys for inputting characters of the Roman alphabet, *hiragana* characters, symbols, and the like; cursor movement keys for moving the cursor left or right along the character string displayed on the display 10; a space bar; a non-conversion key; a conversion key; an input mode conversion key for selectively changing and setting an input mode between "*Romanji*," "*Hiragana*," or "*Alphabet*;" a format setting key for setting a printing format including character size and font; a character mode key for displaying a selectable character mode, such as normal character mode or shaded character mode; a mode conversion key for changing between various set modes; a print key for executing printing; a tape feed key for feeding a print tape 5; a power source key for turning the power source ON and OFF; and the like.

Next, a brief description of the print mechanism PM will be provided while referring to Fig. 3. A thermal head 13 is provided in the print mechanism PM with a predetermined number of thermal elements aligned vertically therein. A print tape 5 made from a transparent film into a predetermined width, for example, 12 mm, and an ink ribbon are supplied to the thermal head 13 while the thermal elements are energized. The print tape, with a two-sided tape attached thereto, is discharged from the frame 2. The print tape 5, the ink ribbon, the two-sided tape, and other components are integrally housed in a parallelepiped tape accommodation cassette.

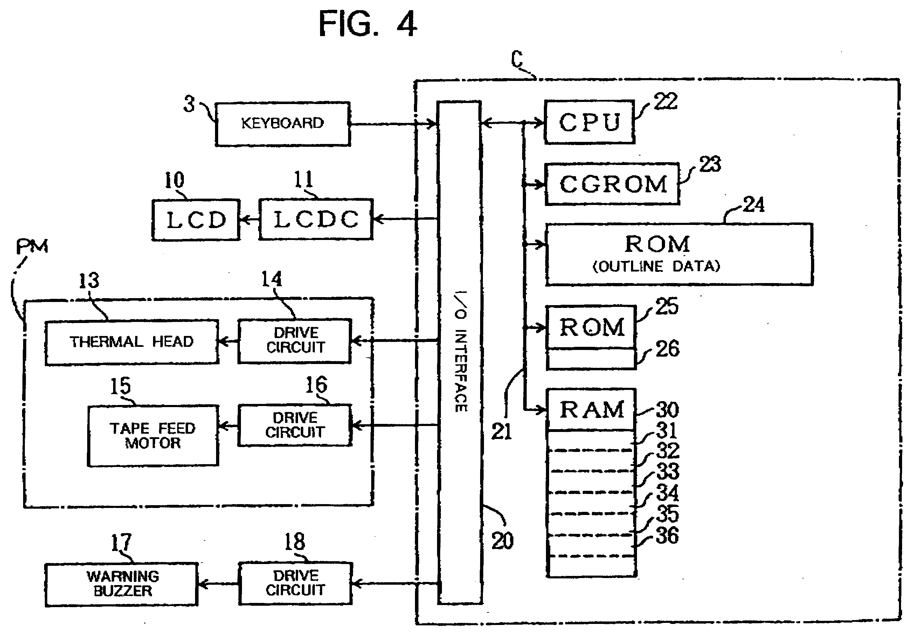

Next, a description of the system for controlling the tape printer 1 will be provided while referring to the block diagram of Fig. 4.

An input/output interface 20 has connected thereto the keyboard 3; a display controller (LCDC) 11 having a display RAM for displaying output of display data on the liquid crystal display (LCD); a drive circuit 14 for driving the thermal head 13; a drive circuit 16 for driving a tape feed motor 15 for rotating a various rollers and a plurality of spools wound with the two-sided tape, ink ribbon, and print tape; and a drive circuit 18 for a warning buzzer 17. A control device C includes a CPU 22; a CGROM 23; ROMs 24 and 25; a RAM 30; and an input/output interface 20, all connected via a bus 21 (which is, for example, a data bus).

For each of a variety of characters, the CGROM (pattern data memory) 23 stores dot pattern data, for the purposes of display, in correspondence with code data. The ROM (which is an outline data memory and which corresponds to the character generator) 24 stores, categorized by font (for example, gothic and Ming-cho (like Times Roman) fonts) and in correspondence with the code data, outline data for designating the outline of each of several characters such as Chinese characters, *hiragana*, Roman alphabetic characters and for printing the characters.

The ROM 25 stores a display drive control program for controlling the display controller 11 according to code data of characters such as symbols, numbers and characters inputted through the keyboard 3; an image developing process control program for converting outline data, which correspond to code data in the text memory 31, into dot patterns for printing, and for developing the dot patterns in a print buffer 36; a print drive control program for serially retrieving data from the print buffer 36 and for driving the thermal head 13 and the tape feed motor 15; and a tape print control program (to be described later).

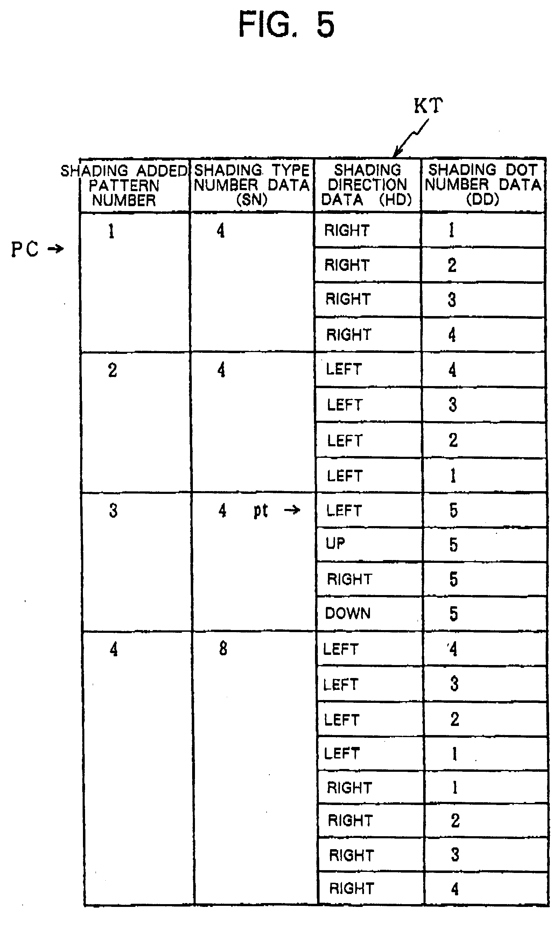

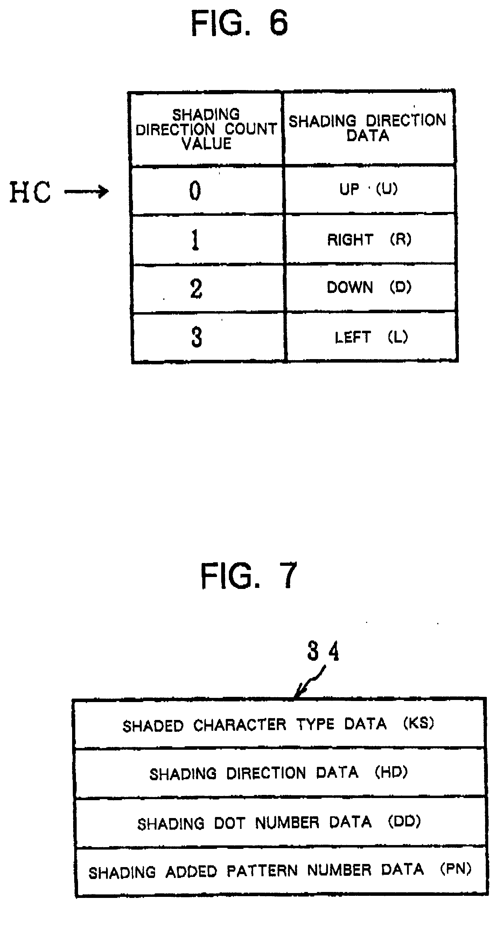

A set text memory 26 is provided in the ROM 25. The set text memory 26 stores a shading designation table KT and code data. As shown in Fig. 5, the shading designation table KT has stored therein, in correspondence with each counter value (1 through 4) in the pattern counter for indicating four types of shading added patterns, shading designation data, made from shading dot number data DD, direction data HD, for designating the direction at which the shading is to be added, and shading type number data SN. As shown in Fig. 6, the code data includes the shading direction (up, right, down, left) corresponding to each counter value HC (0 through 3)in the shading direction counter.

The code data for characters, symbols, and the like inputted from the keyboard is stored as text data in the text memory (which corresponds to a text data memory means) 31 in the RAM 30.

A plurality of print format information such as character size data, set for printing normal characters, font data, and print direction (vertical printing or horizontal printing) is stored in the print format memory 32.

Flag data and pointer values TXP are stored in the flag/pointer memory 33. The pointer values TXP are from a text pointer for designating addresses in the text memory 31. The flag data includes a text mode flag TMF for setting a mode for inputting and editing text data made from character strings; a normal print flag NMF for printing the character string as normal characters; a shaded character mode flag KMF for printing the character string as shaded characters; a a whitened-out character mode flag SKF for printing the character string into whitened-out characters; a pattern shaded character mode flag PMF for printing the character string into shaded characters using a shading added pattern; a shading direction flag KHF for setting the direction at which shading is added; a shading dot number setting mode flag KDF for getting the dot number of the shading added pattern setting mode flag KDF for setting the shading added pattern; a character mode change flag PCF for changing between the normal character mode and a plurality of shaded character modes; and a shading flag KF for setting when printing characters, symbols, and the like into shaded characters.

In the shading information memory 34 is stored shading information such as type data KS, that represents the type of shaded character that is set, shading direction data HD, shading dot number data DD, shading added pattern number data PN. Also, the count value HC of the shading direction counter, the count value DC of the shading dot number counter, and the count value PC of the shading added pattern number counter are stored in the shading information memory 34.

In the work data memory 35 is provided a plurality of work memories WK (0 through n) for producing dot pattern data of a shaded character by shifting the retrieved basic outline data for every one dot in the shading direction and storing the result.

The print buffer 36 has stored therein dot pattern data of the plurality of image developed characters and symbols. That is, the print buffer 36 is provided with a memory capacity of 128 bits (16 bites) in the vertical direction and a predetermined amount of bits for 50 characters in the horizontal direction.

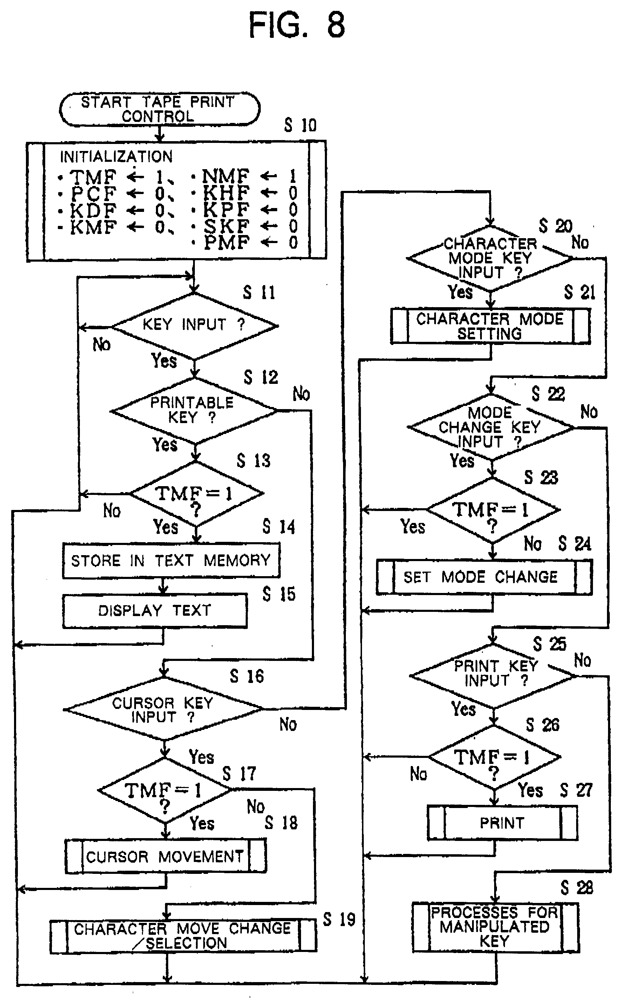

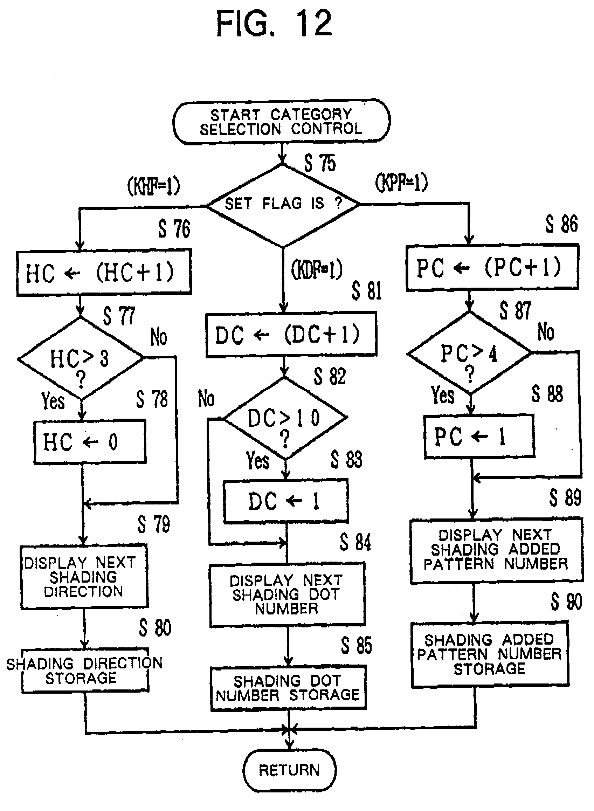

Next, a description for the tape print control routine performed by the control device C of the tape print device 1 will be provided based on the flow charts indicated in Figs. 8 through 18. The numbering Si (i = 10, 11, 12...) in the diagrams refers to the steps of the program.

When the power source is turned on by manipulation of the power source key, the tape print control shown in Fig. 8 is started and initialization is performed in S10. In the initialization processes the text mode flag TMF and the normal character mode flag NMF of the above-described mode flags are set (i.e., so that the flag data is 1) and the character mode change flag PCF, the shading direction setting mode flag KHF, the shading dot number setting mode flag KDF, the shading added pattern setting mode flag KPF, the shaded character mode flag KMF, the whitened-out character mode flag SKF, and the pattern shaded character mode flag PMF are all reset (i.e., so that the flag data is explanation 0). That is, basically input of text is possible and initialization for normal painting of text is performed.

Next, when a manipulated key is a printable key such as for a character, symbol, or alphabetic character (i.e. S11 and S12 are "YES"), and when a text mode flag TMF is set (i.e. S13 is "YES"), the text code for the inputted character is stored in the text memory 31 in S14. Then the character is displayed on the display 10 in S15, whereupon the routine returns to S11. However, when the conversion key is manipulated after a string of *hiragana* are inputted, the code data for the Chinese character to which the string of *hiragana* is converted is stored in the text memory 31 in S14 and the Chinese character is displayed on the display 10 in S15. On the other hand, when the text input mode is not set (i.e., S13 is "NO"), manipulation of printable keys is ignored and the routine returns to S11.

Next, when a cursor movement key is manipulated (i.e., S11 is "YES," S12 is "NO," and S16 is "YES"), and when the text mode flag is set to the text input mode (i.e. S17 is "YES"), cursor movement processes for moving the cursor right or left are executed in S18, after which the routine returns to S11.

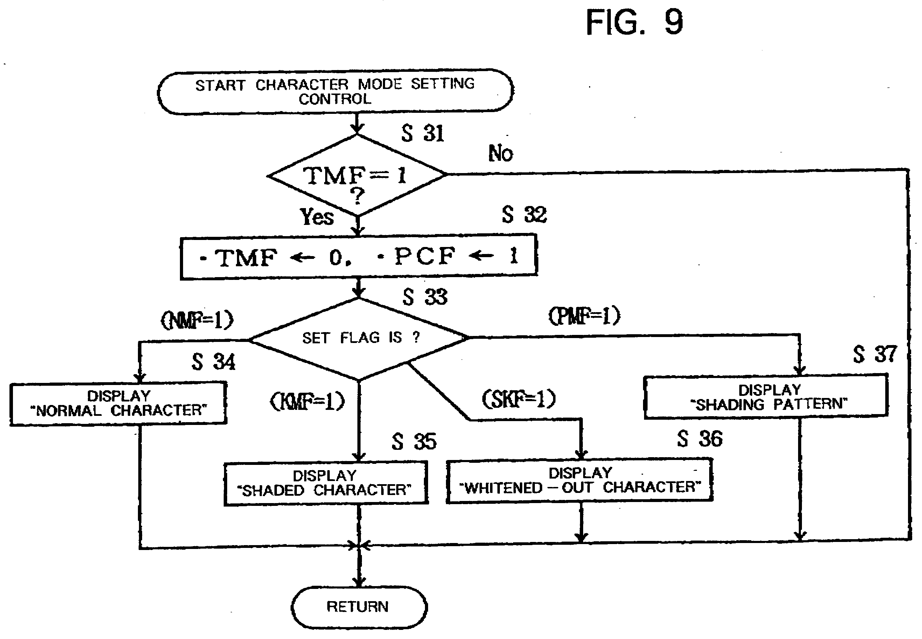

Next, when the character mode for confirming the present character mode key is manipulated (i.e., S11 is "YES, "S12 and S16 are "NO," and S20 is "YES"), the character mode setting process control shown in Fig. 9 is executed in S21.

When at the start of this control the text mode flag TMF is determined to be set (i.e. S31 is "YES"), the text mode flag TMF is reset and the character mode change flag PCF is set in S32. Next, which of the normal character mode flag NMF, the shaded character mode flag KMF, the whitened-out character mode flag SKF, or the pattern shaded character mode flag PMF is presently set is determined in S33. When the normal character mode flag NMF is set (i.e., NMF is 1) "Normal Character" is displayed on the display 10 in S34, whereupon this control process is completed and the tape print control returns to S11. Also, when the shaded character mode flag KMF is set (i.e., KMF is 1), "Shaded Character" is displayed on the display 10 in S35, whereupon the program returns to S11 in the same way as described above. Also, when the whitened-out shaded character mode flag SKF is set (i.e., SKF is 1), "Whitened-out Shaded Character" is displayed on the display 10 in S36, whereupon the program returns to S11 in the same way as described above. Further, when the pattern shaded character mode flag PMF is set (i.e., PMF is 1), "Shading Pattern" is displayed on the display 10 in S37, whereupon the program returns to S11 in the same way as described above. For example, when only text is inputted after the power is turned ON, "Normal Character" is displayed. When at the start of this control the text mode flag TMF is not set (i.e., S31 is "NO"), this control will be immediately terminated and the control will return to S11 as described above.

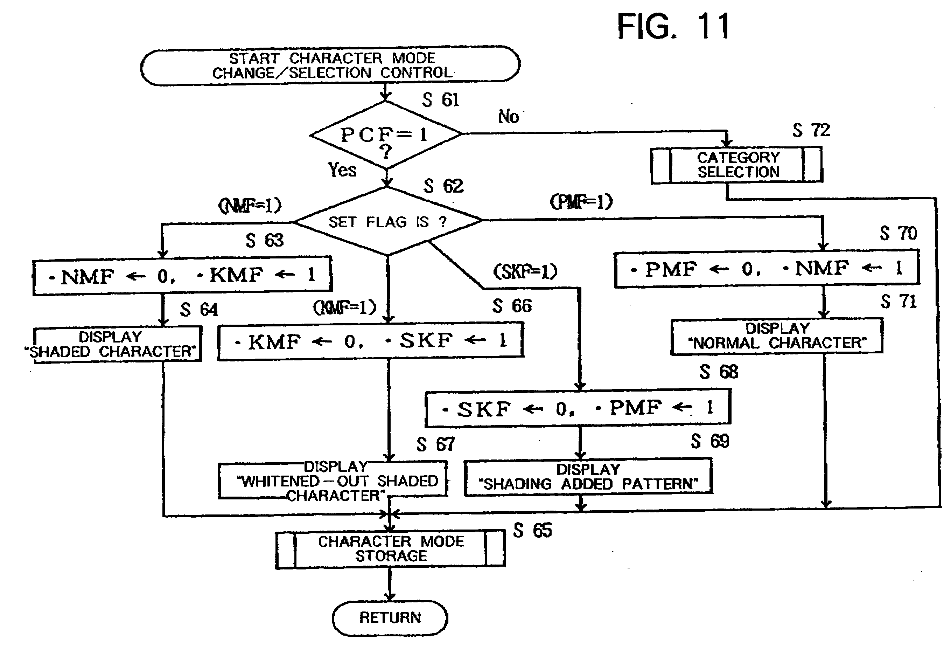

However, when during tape print control a cursor movement key (i.e., the cursor key for either left or right movement) is manipulated when "Normal Character" is being displayed on the display 10 (i.e.,S11 is "YES," S12 is "NO," and S16 is "YES"), because the text mode flag TMF is not set (i.e., S17 is "NO"), the character mode change/selection process control shown in Fig. 11 is executed in S19.

When at the start of this control process the character mode change flag PCF is set (refer to S32) (i.e., S61 is "YES"), which of the normal character mode flag NMF, the shaded character mode flag KMF, the whitened-out shaded character mode flag SKF, or the pattern shaded character mode flag PMF is set is determined in S61. When the normal character mode flag NMF is set (i.e., NMF is 1), the normal character mode flag NMF is reset and the shaded character mode flag KMF is set in S63. Then "Shaded Characters" is displayed on the display 10 in S64. Afterward, shaded character data KM is stored in the shading information memory 34 as shaded character type data KS in S65, whereupon this control is completed and the tape print control returns to S11.

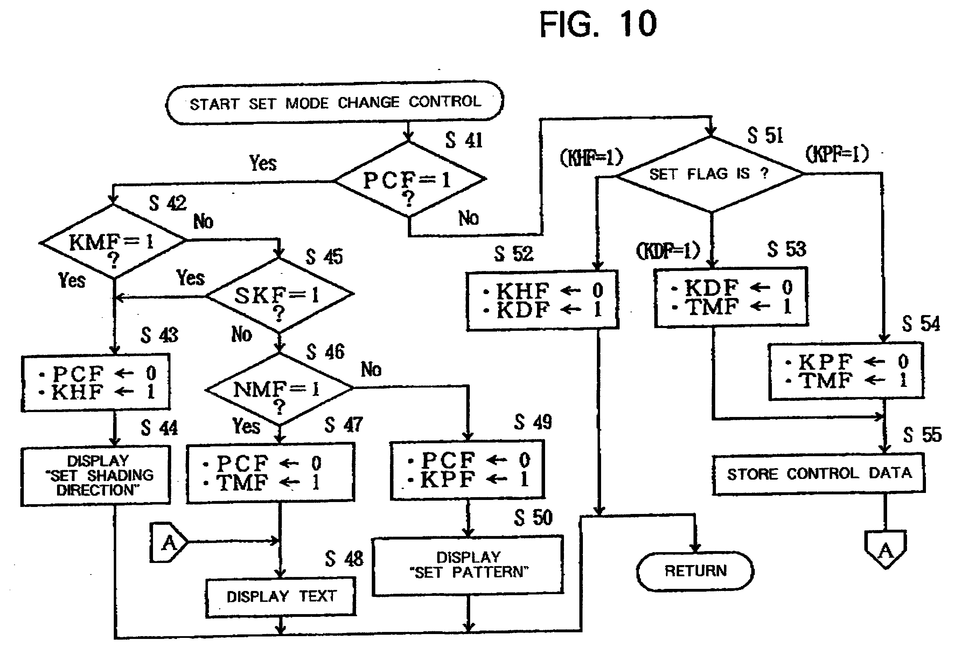

Afterward, in the tape print control, when the mode conversion key is manipulated in order to select a shadow dot number or a shading direction, which are necessary for shaded character printing (i.e., S11 is "YES," S12, S16, S20 are "NO," and S22 is "YES"), if the text mode flag TMF is not set (i.e., S23 is "NO"), the set mode change process control (refer to Fig. 10) is executed in S24. However, when the text mode flag TMF is set (i.e., S23 is "YES"), manipulation of the mode change key is ignored and the program returns to S11.

When the start of this control the character mode change flag PCF is set (i.e., S41 is "YES"), and the shaded character mode flag KMF is set (i.e., S42 is "YES"), the character mode change flag PCF is reset and the shading direction setting mode flag KHF is set in S43. Then "Set Shading Direction" is displayed on the display 10 in S44, whereupon this control is completed and the program returns to S11.

Here, in the tape print control, when a cursor movement key is manipulated, character mode change/selection process control is executed in S19 in the same manner as described previously.

At the start of this control, because the character mode change flag PCF is not set (refer to S43) (i.e., S61 is "NO"), category selection process control is executed in S72.

When this control is started, first, which flag of the shading direction setting mode flag KHF, the shading dot number setting flag KDF, or the shading added pattern setting mode flag KPF is set is determined in S75. Next, when the shading direction setting mode flag KHF is set (refer to S43), the shade direction count value HC is incremented by one in S76. When the count value HC is a maximum value of 3 or less, (i.e., S77 is "NO"), the next shading direction is displayed on the display 10 in S79. Then shading direction storage processes are executed in S80, whereupon this control is completed, and the routine returns to S11.

In the shading direction storage processes, the shading direction data KD corresponding the indicated shading direction is stored in the shading information memory 34 when the return key is manipulated. However, the shading direction data HD will not be stored in the shading information memory 34 by manipulation of any key other than the return key. When the count value HC is larger than the maximum value of 3 (i.e., S77 is "YES"), the count value HC is set to 0 in S78, whereupon S79 and S80 are executed and the program returns to S11. For example, as shown in Fig. 6, when count value HC is incremented from 0 to 1, "Shading: Right" is displayed. However, when the count value HC is incremented from 3 to 4, 0 is set and "Shading: Up" is displayed.

Next, in the tape print control, when the mode change key is manipulated, the setting mode change process control is executed in S24 in the same manner as described previously.

When at the start of this control the character mode change flag PCF is not set (i.e., S41 is "NO"), which flag of the shading direction setting mode flag KHF, shading dot number setting flag KDF, or the shading added pattern setting mode flag KPF is set is determined in S51. When the shading direction setting mode flag KHF is set (refer to S43), the shading direction setting mode flag KHF is reset and the shading dot number setting flag KDF is set in S53, whereupon this control is completed, and the routine returns to S11.

Next, in the tape print control, when a cursor movement key is manipulated, the character mode change/selection process control is executed in S19 in the same manner as described previously.

At the start of this control, the character mode change flag PCF is not set (i.e., S61 is "NO"), so the category selection process control is executed in S72.

When at the start of this control the results of the determination in S75 reveals that the shading dot number setting flag KDF is set (refer to S52), the shade dot number count DC is incremented by one in S81, when the count number DC is the maximum value of 10 (10 dots) or less (i.e., S82 is "NO"), the next shading dot number DD is displayed on the display 10 in S84. Then shading dot storage processes are executed in S85, whereupon this control is completed, and the routine returns to S11.

In the shading dot storage processes, indicated shading dot number data DD is stored in the shading information memory 34 when the return key is manipulated. However, the shading dot number data DD will not be stored in the shading information memory 34 by manipulation of any key other than she return key. When the count value DC is larger than the maximum value of 10 (i.e., S82 is "YES"), the count number DC is set to 1 (1 dot) in S83, whereupon S84 and S85 are executed and the program returns to S11. For example, when the count value DC is incremented from 1 to 2, "Shading: 2 DT" is displayed and when the count value DC is incremented from 9 to 10, "Shading: 10 DT" is displayed. However, when the count value DC is incremented from 10 to 11, 1 is set, and "Shading: 1DT" is displayed.

Next, in the tape print control, when the mode change key is manipulated, the setting mode change process control is executed in S24 in the same manner as described previously.

When at the start of this control the character mode change flag PCF is not set (i.e., S41 is "NO"), and as a result of the determination in S51 the shading dot number setting flag KDF is determined as set (refer to S52), the shading dot number setting flag KDF is reset and the text mode flag TMF is set in S53. Next, the control data DC including the shaded character print code is stored in the lead address of the text memory 31 in S55. Then the text data stored in the text memory 31 is displayed on the display 10 in S48, whereupon this control is completed, and the routine returns to S11.

In the tape print control, when a cursor movement key is manipulated while "Normal character" is being displayed on the display 10, the first "Shaded Character" is displayed on the display 10 as a result of the processes in S63 and S64. When a cursor movement key is again manipulated, because the character node change flag PCF is set (i.e., S61 is "YES") and because the shaded character mode flag KMF is set in S62, the shaded character mode flag KMF is reset and the whitened-out shaded character mode flag SKF is set in S66, "Whitened-out" is displayed on the display 10 in S67, and the whitened-out shaded character data SKM is stored in the shading information memory 34 as shaded character type data KS in place of the shade character data KM in S65.

In the tape print control, when the mode change key is manipulated, the set mode change control is executed in S24. Although the character mode change flag PCF is set (i.e., S41 is "YES"), because the shaded character mode flag KMF is not set (i.e., S42 is "NO") and because the whitened-out shaded character mode flag SKF is set (i.e., S45 is "YES"), the character mode change/selection process control and the set mode change control are executed by manipulation of a cursor movement key and the mode change key in the same manner as described above for when the shaded character mode flag KMF is set. The shading direction and the shading dot number are sequentially set. Finally, the shading dot setting mode flag KDF is reset and the text mode flag TMF is set in S53. Then the control data CD including the shaded character print code is stored in the lead address of the text memory 31 in S55. Next text data stored in the text memory 31 is displayed on the display 10 in S48, whereupon this control is completed and the program returns to S11.

On the other hand, in the tape print control, when a cursor movement key is manipulated while "Normal Print" is displayed on the display 10, the first shaded character is displayed on the display 10 in S63 and S64. When a cursor movement key is remanipulated as described above, "Whitened-out Shaded character" is displayed on the display 10 in S67. Further, when a cursor movement key is again manipulated, because the whitened-out shaded character mode flag SKF has been set in S62, the whitened-out shaded character mode flag SKF is reset and pattern shaded character mode flag PMF is set in S68. "Pattern With Shading Added" is displayed on the display 10 in S69. In the shading information memory 34, shading added pattern data KP is stored in the shading information memory 34 as shaded character type data KS in S65.

Afterward, in the tape print control, when the mode change key is manipulated in order to set the shading added pattern number, the set mode change process control is executed in S24 in the same manner as described above. At this time, although the character mode change flag PMF is set (i.e., S41 is "YES"), because the pattern shaded character mode flag PMF is set (i,e., S42, S45, and S46 are "NO"), the character mode change flag PCF is reset and the shading added pattern setting mode flap KPF is set in S49. Then "Set Pattern" is displayed on the display 10 in S50, this control is completed, and the routine returns to S11.

Here, in the tape print control, if a cursor movement key is manipulated, the character mode change/selection process control is executed in S19.

When at the start of this control the shading added pattern setting mode flap KPF is determined as set (refer to S49) as a result of the determination in S75, the shading added pattern number count value PC is incremented by one in S86. If the count value PC is the maximum value of 4 or less (i.e., S87 is "NO"), the next shading added pattern number PN is displayed on the display 10 in S89. Then the shading added pattern number storage process is executed in S90, whereupon this control is completed, and the routine returns to S11.

In the shading added pattern number storage process, the displayed shading added pattern number PN will be stored in the shading information memory 34 when the return key is manipulated. However, the displayed shading added pattern number PN will not be stored in the shading information memory 34 by manipulation of any key other than the return key. When the count value PC is greater than the maximum value of 4 (i.e., S87 is "YES"), the counter value PC is set to 1 in S88, and the program returns to S11 after S89 and S90 are executed. For example, when the counter value PC is incremented from 1 to 2, "Pattern: 2" is displayed. When the counter value PC is incremented from 2 to 3, "Pattern: 3" is displayed. However, when the counter value PC is incremented from 4 to 5, 1 is set and "Pattern: 1" is displayed.

Next, in the tape print control, when the mode change key is manipulated, the set mode change process control is executed in S24 in the same manner as described above.

When at the start of this control the shading added pattern setting mode flap KPF is not set (i.e., S41 is "NO"), then the character mode change flag PCF is determined as set (refer to S49) as a result of the determination in S75, the shading added pattern setting mode flag KPF is reset and the text mode flag TMF is set in S54. Next, the control data CD including the shaded character print code is stored in the lead address of the text memory 31 in S55, whereupon this control is completed and the program returns to S11.

On the other hand, in the tape print control,
when a cursor movement key is manipulated while "Normal Print" is displayed on the display 10, the first shaded character is displayed on the display 10 in S63 and S64. When a cursor movement key is again manipulated, "Whitened-out Shaded character" is displayed on the display 10 in S67 as described above. Further, when a cursor movement key is again manipulated in this situation, "Shading Added Pattern" is displayed on the display 10 in S69 as described above. Further, when a cursor movement key is again manipulated in this situation, because the pattern shaded character mode flag PMF is determined as set in S62, the pattern shaded character mode flag PMF is reset and the normal character node flag NMF is set in S70. Then "Normal Print" is displayed on the display 10 in S71. Next, data relating to shaded characters is erased from the shading information memory 34 in S65, whereupon the program returns to S11.

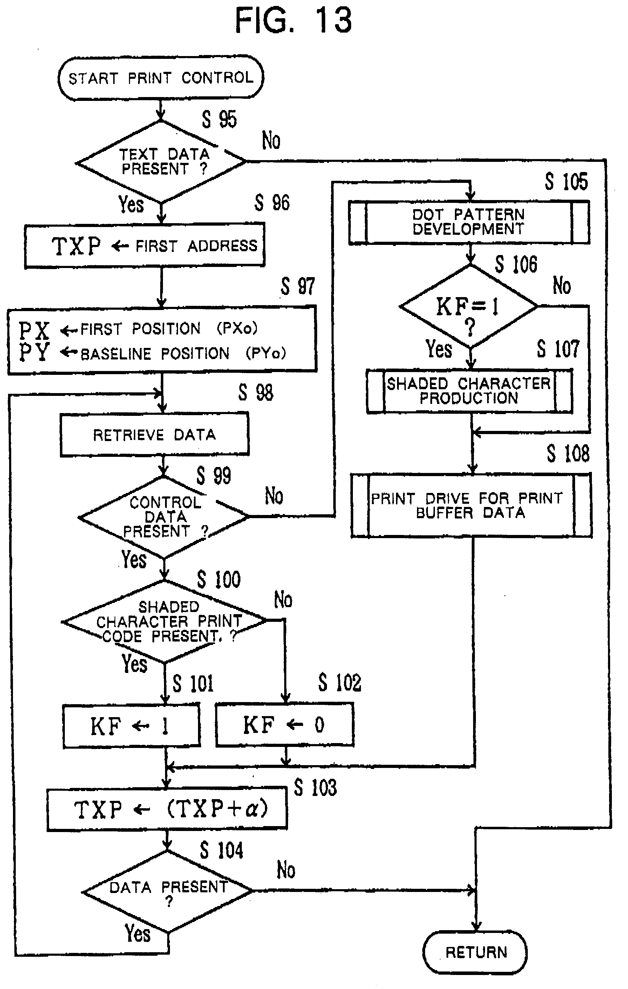

Next, in the tape print control, when the print key is manipulated for printing inputted text (i.e., S11 is "YES," S12, S16, S20, and S22 are "NO," and S25 is "YES"), when the text mode flag TMF is set (i.e., S26 is "YES"), the print process control (refer to Fig. 13) is executed in S27.

At the start of this control, first, when text data is determined to exist based on the data of the text memory 31 (i.e., S95 is "YES"), the lead address of the text memory 31 is set to the text pointer value TXP in S96. Next, the development start position (PX₀) of the X direction (i.e., the direction that is parallel to the print direction) is set for the development position pointer PX in the print buffer 36 and the development position (PY₀) of the Y direction which is perpendicular to the X direction, that is, the development position of the base line position, is set for the development position pointer PX in S97. Next, the data of the text memory 31 at the text pointer value TXP is retrieved in S98.

When this data is control data CD (i.e., S99 is "YES") and shaded character print code data is included in the control data DC (i.e., S100 is "YES"), the shading flag KF is set in S101, and the text pointer value TXP is incremented only by a predetermined pointer number α in S103. When text data for further development process exists in the text memory 31 based on the text pointer value TXP (i.e., S104 is "YES"), the program returns to S98. When character size data and text data are stored in the control data CD and when shaded character print code is not included (i.e., S100 is "NO"), the shading flag KF is reset in S102 and the program returns to S103.

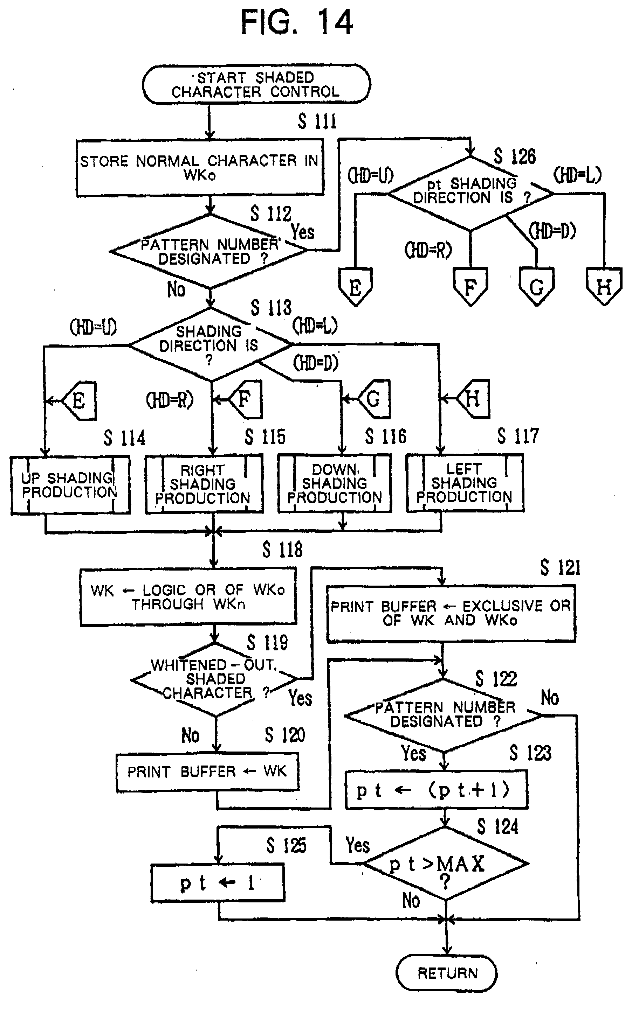

When the data next retrieved is code data for a symbol or a character (i.e., S98 and S99 are "NO"), dot pattern development process control is executed in S105. Next, when the shading flag KF is set (i.e., S106 is "YES"), shaded character production process control (refer to Fig. 14) is executed in S107. However, when the shading flag KF is not set (i.e., S106 is "NO"), the program skips S107 and proceeds to S108.

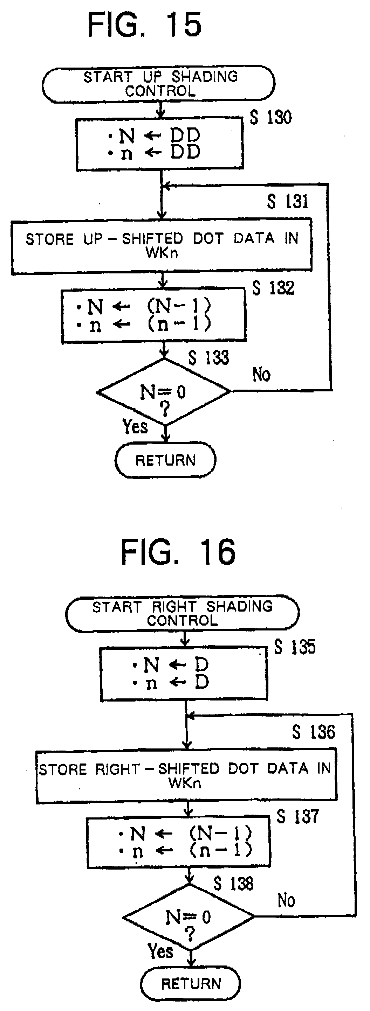

When this control starts, first, the dot pattern data originally developed in S106 is stored in the work memory WK0 of the work data memory 36 in S111. When the shading added pattern data KP in the shading information memory 34 is not designated as shaded character type data KS, that is, when the shaded characters are printed based on the set shading direction and shading dot number (i.e., S112 is "NO"), whether the shading direction data HD is up U, right R, down D, or left L is determined in S113. When the shading direction data HD is up U, the upper shading production process control (refer to Fig. 15) is executed in S114.

At the start of this control, the shading dot number data DD is used to set both of the variables values N and n in S130. Next, the base dot pattern data stored in the work memory WK0 is shifted upward by the dot number corresponding to the variable value N and then stored in the work memory WKn in S131. Then both variable values N and n are decremented by 1 in S132. When the resultant variable value N is not 0 (i.e., S133 is "NO"), the program returns to S131. When S131 through S133 are repeated according to the value of the shading dot number data DD, the dot pattern data shifted upward corresponding to the variable number N is in the condition of being stored in the plurality of work memories WK1 through WKn. Because the value of the variable number N is 0 (i.e., S133 is "YES") in this condition, this control is completed and the program returns to the shaded character production process control of S118.

Also, when the shading direction data KD is right R, the right shading production process control (refer to Fig. 16) is executed in S115.

In the same way, both variable values N and n are set to the value of the shading dot number data DD in S135. The base dot pattern data is shifted right by the dot number corresponding to the variable value N and then stored in the work memory WKn in S136. Then both the variable values N and n are decremented by one in S137. When S 136 through S138 are repeated corresponding to the value of the shading dot number data DD, the dot pattern data shifted right corresponding to the variable value N is in the condition of being stored in each of the plurality of work memories WK1 through Wkn (i.e., S138 is "YES"). Therefore this control is completed and the program returns to S118.

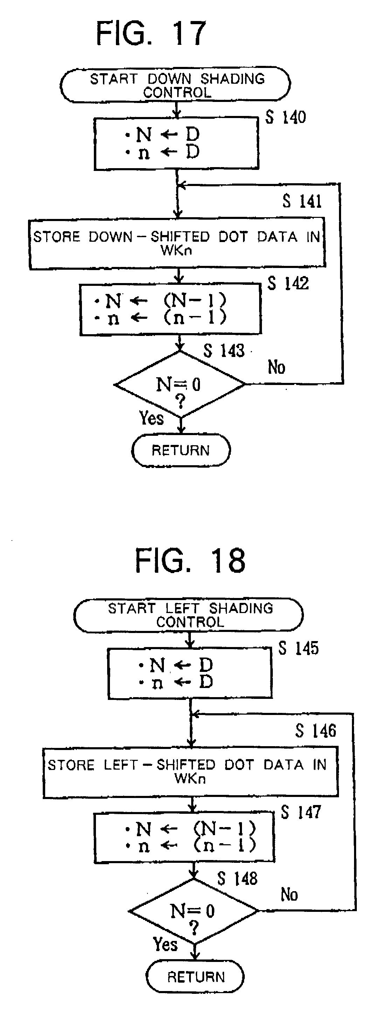

Further, when the shading direction data HD is down D, the down shading production process control (refer to Fig. 17) is executed in S116.

In the same way, both variable values N and n are set to the value of the shading dot number data DD in S140. The base dot pattern data is shifted downward by the dot number corresponding to the variable value N and then stored in the work memory WKn in S141. Then both the variable values N and n are decremented by one in S142. When S141 through S143 are repeated corresponding to the value of the shading dot number data DD, the dot pattern data that is shifted upward corresponding to the variable value N is in the condition of being stored in each of the plurality of work memories WK1 through Wkn (i.e., S143 is "YES"). Therefore this control is completed and the program returns to S118.

Further, when the shading direction data HD is left L, the left shading production process control (refer to Fig. 18) is executed in S116.

In the same way, both variable values N and n are set to the value of the shading dot number data DD in S145. The base dot pattern data is shifted left by the dot number corresponding to the variable value N and then stored in the work memory WKn in S146. Then both the variable values N and n are decremented by one in S147. When S146 through S148 are repeated corresponding to the value of the shading dot number data DD, the dot pattern data shifted upward corresponding to the variable value N is in the condition of being stored in each of the plurality of work memories WK1 through Wkn (i.e., S148 is "YES"). Therefore, this control is completed and the program returns to S118.

Next in the shaded character production process control, in regards to the plurality of dot pattern data stored in the plurality of work memory WK0 through WKn, the theoretical sum of the plurality of dot data corresponding to each dot data is calculated and stored in the work memory WK in S118. When the shaded character type data KS is not whitened-out shaded character data SKM, that is, when it is shading data KM (i.e., S119 is "NO"), the dot pattern data of the shaded character stored in the work memory WK is stored in the print buffer 36 in S120. When shading added pattern data KP is not designated (i.e., S122 is "NO"), this control is completed and the program returns to S11.

However, when the shaded character type data KS is set as whitened-out shaded character data KDM (i.e., S119 is "YES"), in regards to the dot pattern data of the shaded character stored in the work memory WK and the base dot pattern of the work memory WK, an exclusive-or operation is executed for the two dot data corresponding to each dot data. The dot pattern data of the resultant shading added whitened-out character is stored in the print buffer 36 in S121. When the shading added pattern data KP is not designated (i.e., S122 is "NO"), this control is completed and the program returns to S11.

Next, in the print process control, the dot pattern data developed in the print buffer 36 is outputted to the print mechanism PM and printing is performed by the thermal head 13 while print tape 5 is fed in S108. Afterward, the program returns to S98 via S103 and S104. S98 through S108 are repeated until all of the text has undergone development processes (i.e., S104 is "NO"), whereupon this control is completed and the program returns to S11.

However, in this control, when a key other than the print enabling key, a cursor movement key, a character mode key, the node change key, or the print key is pressed (i.e., S11 is "YES," and S12, S16, S20, S22, and S25 are "NO"), a process corresponding to the manipulated key is executed in S28 and the program returns to S11.

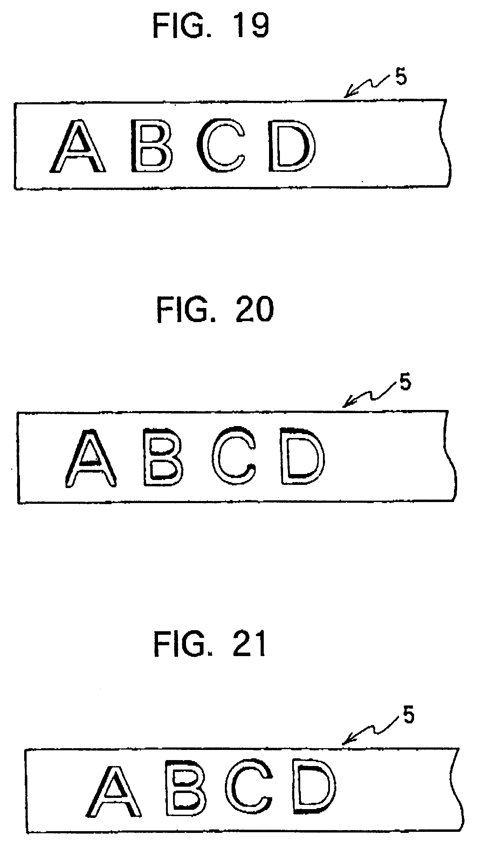

For example, when whitened-out shaded character is set, when the shading direction is set to left L, and when the shading dot number is set to 5 dots, an inputted character string ABCD will be printed on the print tape 5 with a five-dot shadow attached to the left side of each character as shown in Fig. 19. In the same way, when whitened-out shaded character is set, when the shading direction is set to up U, and when the shading dot number is set to 5 dots, an inputted character string ABCD will be printed on the print tape 5 with a five-dot shadow attached to the upper side of each character as shown in Fig. 20.

However, in the shaded character print process control, after S111 is executed, when the shaded character type data KS is designated as shading added pattern data KP (i.e., S112 is "YES"), as shown in Fig. 5, the category pointer value pt is set to the first shading type category of the plurality of shading type categories provided to the set shading added pattern, and which shading direction is indicated by this category pointer value pt is determined in S126. As a result of this determination, the up shading production process control is executed in S114 when the shading direction data HD is determined to be up U, the right shading production process control is executed in S115 if the shading direction data HD is determined to be right R, the down shading production process control is executed in S116 if the shading direction data HD is determined to be down D, and the left shading production process control is executed in S117 if the shading direction data HD is determined to be left L as described previously.

When the shadow added pattern data KP is determined as designated after S118 through S121 are executed (i.e., S122,is "YES"), the category pointer value pt is incremented by one in S123. when this category pointer value pt is not the maximum value (MAX) of the shading type number N (i.e., S124 is "NO"), this control is completed and the program returns to S108. However, when the category pointer value pt is the maximum value of the shading type number N (i.e., S124 is "YES"), the category pointer value pt is set to an initial value of one in S124, this control is completed and the program returns to S108 in the same way as described previously.

For each character string, dot pattern data of shadow character are produced and printed based on the set shadow added pattern. When all text has undergone development processes (i.e., S104 is "YES"), this control is completed and the program returns to S11.

For example, when the shading added pattern number is set at 3, and when whitened-out shaded character is set, an inputted character string ABCD is printed on the print tape 5 as shown in Fig. 21 with 5 dots worth of shading added to the left side of the letter "A," with 5 dots worth of shading added to the upper side of the letter "B," with 5 dots worth of shading added to the right side of the letter "C," and with 5 dots worth of shading added to the lower side of the letter "D."

As described above, not only the direction at which the shading is added to the character or symbol, but also the dot number of the shading, can be changed. Because characters and symbols are produced and printed from the dot pattern data that has shading with the set dot number added in the set shading direction, the dot number of the shading and the shading direction can be freely changed and attractive characters with shading can be printed.

Further, because the plurality of shading designation data for designating the shading of the character or symbol is set beforehand in the shading designation table KT for each shading added pattern for a plurality of character strings, by only inputting text data and setting the shading added pattern, the character size, and the like, each character string of the inputted text data is developed into dot pattern data that has the set shading added pattern and is printed. Therefore, by setting the shading designation data, a character string wherein each character has shading added can be easily and attractively printed.

Here, an explanation will be provided for the correspondence relationship between the means claimed in the scope of the patent claims and the configuration in the embodiments. The shading setting means corresponds to the category selection process control, particularly to S76 through S80, and S81 through S85. The shading designation data memory means corresponds to the setting content memory 26 of the ROM 25. The pattern setting means corresponds to the category selection process control, particularly to S86 through S90 and the format setting key. The dot pattern data developing means corresponds to the print process control, particularly S105 and the shaded character production process control.

The present embodiment can be modified so that only the shading direction need be set. Also, up, right, down, and left were given as examples of shading directions. However, other shading directions can be added such as right-up, right-down, left-down, and left-up. Also, the pattern numbers 1 through 4 were only indicated as four types of shading added patterns. In addition to these shading added patterns, many shading added patterns can be provided by optionally combining a plurality of shading directions with a plurality of shading dot numbers. Further, a mechanism can be provided capable of producing shading added patterns by combining two or more of the above shading added patterns. Parameters of added patterns can also be inputted. Examples of parameters includes the number of characters to which shading is applied, the order at which the shading direction is modified, or increases or decreases of the shading dot number. Within the technically ideal scope of the present invention, various changes and modifications can be made to the control of the above-described embodiment based on presently existing technology and technology obvious to a skilled artisan. For example, the present invention can be applied to various text processing devices, such as a Japanese language or English language word processors that include, for example, a keyboard, display, dot-print print mechanism, and the like.

As described above, a shading setting means and a dot pattern data developing means are provided to the text processing device according to claim 1. The direction at which shading is attached to a character or symbol can be set. Because dot pattern data is produced and printed for characters and symbols with shading attached thereto in the set direction, decorative shaded characters can be printed with the shading direction freely modified.

In the text processing device according to claim 2, not only the direction at which the shading is added to the character or symbol, but also, the dot number of the shading, can be changed. Therefore characters and symbols are produced and printed from the dot pattern data that has shading with the set dot number added in the set shading direction. Therefore, not only the shading direction but also the dot number of the shading can be freely changed and attractive characters with shading can be printed.

A shading designation data memory means, a pattern size setting means, and a dot pattern data developing means are provided to a text processing device according to claim 3. Also a plurality of shading designation data for designating the shading of each character, symbol, and the like is preset for each shading added pattern for a plurality of character strings. Therefore, all that needs to be done is inputting of text data setting of the shading added pattern. Each text data character string is developed into dot pattern data for the set shading added pattern and the dot pattern data is printed. Therefore, each character string can be simply and attractively printed with shading added to the characters depending on how the shading setting data is set.

## Claims

1. A text processing device comprising:
input means for inputting commands and text data composed of at least one of symbols and characters;
text data memory means for storing the text data inputted by said input means;
a character generator storing data regarding dot patterns of symbols and characters for a selected font;
printing means for printing the symbols and characters;
shading setting means for setting a direction at which shading is added to selected ones of the symbols and characters contained in the text data, information regarding shading direction being outputted from said shading setting means; and
dot pattern data developing means for producing dot pattern data for the selected ones of the symbols and characters to which shading is added based on the data stored in said character generator and based further on the information outputted from said shading setting means, dot pattern data for the selected ones of the symbols and characters being output from said dot pattern data developing means to said printing means.

2. A text processing device according to claim 1, further comprising flag data storing means for storing flag data, and control means responsive to each of the commands inputted from said input means for selectively controlling said text data memory means, said character generator, said printing means, said shading setting means, said dot pattern data developing means and said flag data storing means, and wherein the commands inputted by said input means include a power-on command, and the flag data stored in said flag data storing means includes a text mode flag selectively set and reset, said text mode flag, when set, instructing to set a mode for inputting and editing the text data, and a normal print flag selectively set and reset, said normal print flag, when set, instructing to set a normal print mode for printing the text data in normal characters, wherein when the power-on command is received from said input means, both said text mode flag and said normal print flag are set.

3. A text processing device according to claim 2, wherein the flag data stored in said flag data storing means includes a shaded character print flag and a whitened-out character print flag, one of the normal print flag, the shade character print flag and the whitened-out character flag being exclusively set, wherein the commands inputted by said input means include a character mode display command, and wherein said control means controls said display means to display a description of a character print mode corresponding to the one of the normal print flag, the shade character print flag and the whitened-out character flag that is set.

4. A text processing device according to claim 3, wherein said printing means prints the text data in shaded characters when the shaded character print flag is set and in whitened-out characters when the whitened-out character print flag is set.

5. A text processing device comprising:
input means for inputting a character string composed of at least one of symbols and characters;
text data memory means for storing the character string inputted by said input means;
a character generator storing data regarding dot patterns of symbols and characters for a selected font;
printing means for printing the symbols and characters;
shading designation data memory means for storing a plurality of shading added patterns, each of the plurality of shading added patterns having shading designation data designating shading of each character and symbol making up of the character string;
pattern setting means for setting one of the plurality of shading added patterns in regards to the character string stored in said text data memory means;
dot pattern data developing means for producing dot pattern data for the symbols and the characters making up of the character string based on the character string stored in said text data memory, the data stored in said character generator, and the shading designation data corresponding to the shading added pattern set by said pattern setting means, dot pattern data produced by said dot pattern data developing means being output to said printing means.

6. A text processing device according to claim 5, wherein said shading designation data designates a direction at which shading is added to each character and symbol making up of the character string and a number of dot of the shading added to each character and symbol.

7. A text processing device according to claim 5 or 6, further comprising shading setting means for setting a direction at which shading is added to selected ones of the symbols and characters making up of the character string, information regarding shading direction being outputted from said shading setting mean, and wherein said dot pattern data developing means selectively produces dot pattern data for the selected ones of the symbols and characters to which shading is added based on the data stored in said character generator and based further on the information outputted from said shading setting means, dot pattern data for the selected ones of the symbols and characters being output from said dot pattern data developing means to said printing means.

8. A text processing device according to one of claims 1 to 4 or 7, wherein said shading setting means further sets a shading dot number for the shading, and wherein dot pattern data for the selected ones off the symbols and characters is produced based on the shading dot number set by said shading setting means.

9. A text processing device according to one of claims 1 to 8, wherein said dot pattern data developing means produces dot pattern data for non-selected ones of the symbols and characters based on the data stored in said character generator to print the text data in a normal print mode.

10. A text processing device according to one of claims 1 or 5 to 9, further comprising flag data storing means for storing flag data, and control means responsive to each of the commands inputted from said input means for selectively controlling said text data memory means, said character generator, said printing means, said shading designation data memory means, said pattern setting means, said shading setting means, said dot pattern data developing means and said flag data storing means, and wherein the commands inputted by said input means include a power-on command, and the flag data stored in said flag data storing means includes a text mode flag selectively set and reset, said text mode flag, when set, instructing to set a mode for inputting and editing the text data, and a normal print flag selectively set and reset, said normal print flag, when set, instructing to set a normal print mode for printing the text data in normal characters, wherein when the power-on command is received from said input means, both said text mode flag and said normal print flag are set.

11. A text processing device according to one of claims 2 to 4 or 8 to 10, wherein said control means controls said text data memory means to store the inputted text data when said text mode flag is set.

12. A text processing device according to one of claims 2 to 4 or 8 to 11, further comprising desplay means for displaying the text data inputted through said input means, and wherein said control means controls said display means to display the text data when said text mode flag is set.

13. A text processing device according to one of claims 2 to 4 or 8 to 12, wherein the flag data stored in said flag data storing means includes a shade print flag selectively set and reset, said shade print flag, when set, instructing to set a shading print mode for printing the text data in shaded characters, and wherein said control means controls said printing means to print the text data in shaded characters when the shade print flag is set.

14. A text processing device according to one of claims 2 to 4 or 8 to 13, wherein the commands inputted by said input means include a print mode display command, and said control means controls said display means to selectively display the normal print mode and the shading print mode based on the normal print flag and the shade mode flag.

15. A text processing device according to one of claims 2 or 8 to 14, wherein the flag data stored in said flag data storing means includes a shaded character print flag and a whitened-out character print flag, shading added pattern print flag, one of the normal print flag, the shade character print flag, the whitened-out character flag, and the shading added pattern print flag being exclusively set, wherein the commands inputted by said input means include a character mode display command, and wherein said control means controls said display means to display a description of a character print mode corresponding to the one of the normal print flag, the shade character print flag, the whitened-out character flag and the shading added pattern flag that is set.

16. A text processing device according to claim 15, wherein said printing means prints the text data in shaded characters defined by the shading added pattern set by said pattern setting means when shading added pattern flag is set.

17. A text processing device according to one of claims 1 to 16, wherein said printing means print the symbols and characters on a continuous, web-like print medium.
